# EUROPEAN PATENT SPECIFICATION

(11) **EP 2 073 621 B1**
(45) Date of publication and mention of the grant of the patent: **18.03.2020**
(21) Application number: 07820920.2
(22) Date of filing: 04.10.2007
(51) Int. Cl.: A01B 21/08, A01B 71/08

(54) **A DISC ASSEMBLY FOR AN AGRICULTURAL MACHINE, AS WELL AS A CAP AND A DISC MEMBER OF SUCH A DISC ASSEMBLY**
SCHEIBENANORDNUNG FÜR EINE LANDWIRTSCHAFTSMASCHINE SOWIE KAPPE UND SCHEIBENELEMENT EINER DERARTIGEN SCHEIBENANORDNUNG
ENSEMBLE DISQUE POUR UNE MACHINE AGRICOLE AINSI QUE CACHE ET ÉLÉMENT DE DISQUE D'UN TEL ENSEMBLE DISQUE

(30) Priority: 10.10.2006 SE 0602145
(43) Date of publication of application: 01.07.2009
(73) Proprietor: Väderstad Holding AB, 590 21 Väderstad (SE)
(72) Inventor: FRANSSON, Jörgen, 595 51 Mjölby (SE)
(74) Representative: Groth & Co. KB
(86) International application number: PCT/EP2007/060543
(87) International publication number: WO 2008/043702

(56) References cited:
- EP-A- 0 140 699
- FR-A- 2 689 724
- GB-A- 235 018
- US-A- 4 577 699

## Description

### TECHNICAL FIELD

The present invention relates to a cap connected to a disc member of a disc assembly for an agricultural machine, to a disc member connected to a cap of a disc assembly for an agricultural machine, and to a disc assembly for an agricultural machine, comprising a disc member and a cap.

### BACKGROUND

Several types of agricultural machines are provided with rows of mainly vertically orientated discs, which upon usage are in contact with the ground in order to cultivate the soil. US4519325 shows a special application in a sowing machine where the discs are arranged in pairs, each one of which forming a so-called "V-disc", i.e., two discs arranged in a V-shape that opens a sowing furrow in which seed is placed. A known variant of disc for agricultural machines has, in the central portion thereof, an opening for access when mounting and dismounting the disc. In the mounted state of the disc on an arm via a bearing mounting, a cap is provided in order to cover the opening of the disc to avoid that soil, dust and the like penetrates into the bearing mounting. Said cap, which may be made as a bolted or riveted capsule of metal, or of injection-moulded plastic, retained in place by tightening force, friction, clamping force or by means of a plurality of snap members arranged at a distance from the rotation axis of the disc.

In agricultural work, a simple and quick handling of the machines used is required. In the known solutions, this need is not met. In practical agricultural work, riveted caps cannot at all be removed when dismounting the disc. Other solutions, including bolted caps or caps of injection-moulded plastic, often require specially adapted tools for the removal of the caps. In many situations, particularly out in the fields and the like, access to special tools is limited. In solutions with snap members or the like, for the removal of the cap, the user is, when special tools are lacking, often obliged to use a tool having a slender end that is pressed in between the cap and the disc at the periphery of the cap. Upon such manipulations, the cap is often damaged and has to be replaced.

US 4,577,699 A and EP 0140699 A each discloses a disc assembly for an agricultural machine. US 4,577,699 A discloses a disc assembly comprising a cap and a disc member.

EP 0140699 A2 discloses a seed disk in a vacuum seed meter having a central mounting aperture in the form of a slot widening to a circular hole at its centre.

US 4,519,325 A discloses a grain drill suspension system including a support member comprising a parallelogram link structure and a walking beam member.

### SUMMARY

An object of the invention is to prolong the service life of the parts included in disc assemblies of the type mentioned by way of introduction.

An additional object of the invention is to improve the reliability in the protection of bearing mountings for discs of agricultural machines.

Yet an object of the invention is to provide a solution, for the protection of bearing mountings for discs of agricultural machines, that is space-saving.

An additional object of the invention is to allow a simple and time-efficient management when mounting and dismounting discs of agricultural machines.

Said objects are attained by a cap connected to a disc member of a disc assembly for an agricultural machine according to claim 1, and a disc member connected to a cap of a disc assembly for an agricultural machine according to claim 8.

By means of the locking device, the cap can be efficiently locked to the disc member. The arrangement of such a locking device separate from the engagement member(s) makes it possible to remove the cap by means of a simple manipulation of the locking device, without contact with the engagement member(s) or the rest of the cap. Thereby, the risk decreases of some part of the cap, inclusive of the engagement member(s), being damaged upon dismounting. This represents a great advantage in agricultural work where simple and quick handling of the machines used often is required, and access to special tools is limited in many situations. Thus, in agricultural machines, the cap at the disc unit can easily be removed without being damaged. This allows the cap to be re-used several times, which decreases the costs when using agricultural machines having disc assemblies of the type mentioned by way of introduction. One of a first one and a second one of the engagement members is comprised by the cap and the other one of the first and second engagement member is comprised by the disc member, the first engagement member comprising an end portion, an engagement gap being formed between the end portion and a surface adjacent to the first engagement member, the second engagement member being arranged to be at least partly situated in the engagement gap in the mounted position of the cap. In that connection, the engagement members may be arranged so that they come into engagement with each other upon a mounting motion of the cap that is mainly parallel to a disc plane corresponding to a plane of the principal extension of the disc. This allows a simple and easy-to-use arrangement for an effective prevention of the motion of the cap transverse to the disc plane.

Preferably, the disc member includes a hub flange having said at least one engagement member. Thus, one of the engagement members for the mounting of the cap may be provided on a hub flange belonging to a hub shell included in a hub for the clamping of the disc. This allows the dimensions of the cap to be kept relatively small and be limited to an area of the extension of the hub parts.

Preferably, the second engagement member includes an area at an edge of an engagement cavity in the cap or the disc member. This allows the second engagement member to be formed extraordinarily easily in the production by the formation of a simple hole or the like.

Preferably, the cap is arranged to assume, at mounting, a transition position in which the second engagement member, in a direction perpendicular to the disc plane, is on a level with the engagement gap. Thereby, the cap is adapted to a simple use at mounting including mainly two motions, one of the motions, into the transition position, being bringing the cap into abutment against the disc member so that the engagement members are on correct level with each other, and the other motion being a displacement or a rotation of the cap in the disc plane while abutting against the disc member, so that the engagement members engage each other and the cap is clamped against the disc member. The last motion requires that the cap is arranged to move mainly parallel to the disc plane, from the transition position into the mounted position. Thus, a simple and easy-to-use arrangement is allowed for an effective prevention of the motion of the cap transverse to the disc plane.

Preferably, the locking device includes an elastic portion that is exhibited by one of the cap and the disc member, which elastic portion is arranged to assume, at the mounting of the cap and in an intermediate position of the cap, a resilient position, in which it is elastically deformed by means of contact with the other one of the cap and the disc member, besides which the elastic portion is arranged to assume, in the locking position of the locking device, a blocking position, in which it is not deformed or less deformed than in the resilient position. This imparts the locking device a very simple, reliable and robust design.

Preferably, the locking device includes a locking cavity that is exhibited by the other one of the cap and the disc member, which locking cavity is arranged to receive, in the mounted position of the cap, at least a part of the elastic portion. This allows said part of the locking device to be formed extraordinarily easily in the production by the formation of a simple hole, countersink, or the like, which furthermore provides a reliable locking function.

Preferably, the transition position of the cap corresponds to the intermediate position thereof. This means that the elastic portion of the locking device assumes a resilient position approximately at the same time as the engagement members are on a level with each other, after which the engagement members, by virtue of the motion of the cap in the disc plane, engage each other approximately at the same time as the locking device assumes the locking position thereof. Thus, in a simple mounting measure, there are obtained, on one hand, a clamping state by virtue of the engagement members, and on the other hand a locking in the clamping state by virtue of the locking device.

The objects mentioned above are attained also by a cap according to any one of claims 1-7.

The objects mentioned above are attained also by a disc member according to any one of claims 8-9 and a disc assembly according to any one of claims 10-17.

### DESCRIPTION OF FIGURES

The invention will be described in more detail below, reference being made to the drawings, in which
- Fig. 1 shows a side view of a disc unit for an agricultural machine,
- Fig. 2 shows a perspective view obliquely from above of a disc assembly according to a preferred embodiment of the invention,
- Fig. 3 shows a perspective view obliquely from below of a cap of the disc assembly in Fig. 2,
- Fig. 4 shows a perspective view obliquely from above of a disc member of the disc assembly in Fig. 2,
- Fig. 5 shows a perspective view of a sectioned portion of a disc assembly according to an alternative embodiment of the invention,
- Fig. 6 shows a perspective view of a cross-section of the disc unit in Fig. 1, with the section made along the line VI-VI in Fig. 1,
- Fig. 7 shows a schematic cross-section of two parts of a disc assembly according to an additional alternative embodiment of the invention,
- Fig. 8 shows a schematic perspective view of two parts of a disc assembly according to yet an alternative embodiment of the invention,
- Figs. 9 and 10 schematically show top views of caps of disc assemblies according to additional alternative embodiments of the invention, and
- Fig. 11 shows a partial cross-section view of a disc assembly according to an alternative embodiment of the invention, with the section made along the rotation axis of the disc.

### DETAILED DESCRIPTION

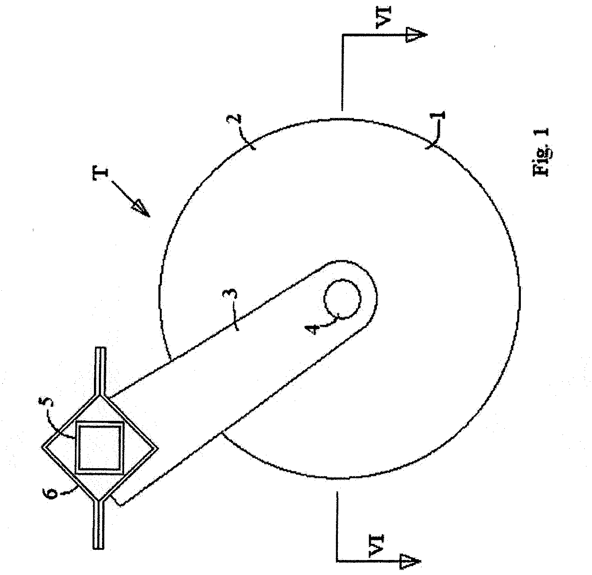

Fig. 1 shows a side view of a disc unit T for an agricultural machine, including a disc assembly 1 having a disc 2 intended to cultivate soil. The disc 2 is mounted on an arm 3 via a hub 4, which arm 3 in turn, in a known way is mounted on a beam 5 via a clamping joint 6.

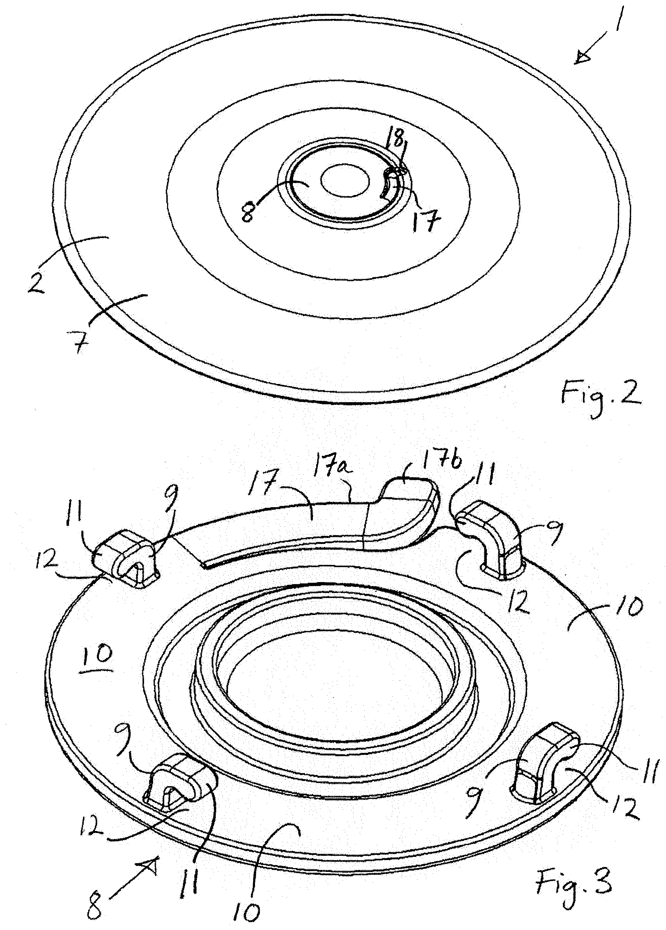

Fig. 2 shows a perspective picture of the disc assembly 1 from a side that is opposite the side of the view in Fig. 1. The disc assembly 1 comprises a disc member 7, which in turn includes the disc 2 and is described in more detail below, as well as a cap 8 mounted in the centre of the disc 2.

Fig. 3 shows a perspective view of the underside of the cap 8, i.e., the side that is opposite the one shown in Fig. 2, in the non-mounted state of the cap. The cap 8, manufactured from a suitable material, e.g., injection-moulded plastic, has a relatively thin and mainly circular shape. The cap 8 is furthermore provided with four first engagement members 9. The first engagement members 9 are formed at an inner surface 10 of the cap 8, and each of which is provided in the form of a hook-like protuberance 9, which has an end portion 11. The end portion 11 extends mainly parallel to the inner surface 10 so that an engagement gap 12 is formed between the end portion 11 and the inner surface 10.

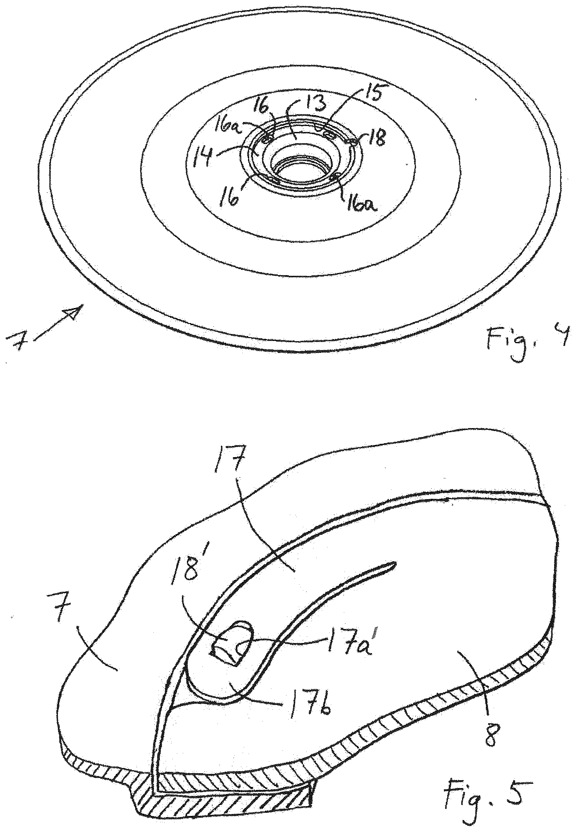

Fig. 4 shows the disc member 7 when the cap 8 is not mounted. The disc 2 may be flat, but is, in this example, slightly cone- or cup-shaped. However, it has a relatively small extension in the direction of the rotation axis thereof. Here, a plane of the principal extension of the disc 2 is designated as disc plane, to which the rotation axis of the disc accordingly is a normal. The disc 2 is made of a relatively hard metal in order to be well adapted to severe stresses upon cultivation. The disc 2 has an opening in the centre thereof, at which a hub shell 13 concentric with the disc 2 is fixedly connected to the disc 2. More precisely, the hub shell 13 comprises a hub flange 14, which at the periphery thereof (not visible in Fig. 4) is welded to the disc 2. The hub shell 13, which is adapted to accommodate, as is described in more detail below, a mounting-bearing device, has a relatively large extension parallel to the rotation axis of the disc and is made of an unhardened metal in order to be easy to produce. Separate manufacture of the disc 2 and the hub shell 13 accompanied by the welding together thereof, accordingly allows to select different material types, adapted to their individual needs, for said elements 2, 13. Alternatively, the disc 2 and the hub shell 13 may be joined in some other suitable way, e.g., by means of a screw joint. The manufacture of the hub shell 13 from unhardened metal has furthermore the advantage that it allows a certain flexibility and resilience. This prevents crack formations that are caused by external forces and usually occur in hub shells of relatively hard metals. Such external forces usually originate from the ground.

The disc member 7 presents, by the position of the hub flange 14 and the opening of the disc, a mainly circular countersunk portion 15, which extends circularly around a central hole in the disc member, and which is arranged to receive the cap 8. The depth of the countersunk portion 15 substantially corresponds to the thickness of the cap 8. Thereby, it is achieved that the outer surface of the cap, in the mounted state of the cap, is on substantially the same level as the corresponding surface of the disc 2, whereby the cap 8 does not exhibit any protruding part that may cause the cap to be damaged or removed when using the disc assembly 1.

As can be seen in Fig. 4, four second engagement members 16 are formed by means of engagement cavities 16a, in this example in the form of through holes, provided in the hub flange 13. More precisely, each one of the second engagement members 16 includes an area at an edge of one of the engagement cavities 16a. Alternatively, the engagement cavities 16a may be formed as non-through depressions. In a mounted position of the cap 8 on the disc member 7, the first and the second engagement members 9, 16 are arranged to be in engagement with each other. In that connection, each one of the second engagement members 16 is at least partly situated in the engagement gap 12, so that the motion of the cap 8 transverse to the disc plane is prevented.

As can be seen in Fig. 2, the disc assembly 1 has a locking device 17, 18 that, in the mounted position of the cap 8, is arranged to assume a locking position for the cap in relation to the disc member 7. The locking device includes an elastic portion 17, or resilient portion, exhibited by the cap 8, and a locking cavity 18 that is exhibited by the disc member 7 and that, in the mounted position of the cap, is arranged to receive a part of the elastic portion 17.

As can be seen in Fig. 3, the elastic portion 17 is provided at the periphery of the cap 8 as an elongate, deflected protuberance 17 having an outer edge 17a that in a plane of the principal extension of the cap connects to the mainly circular periphery of the cap 8.

However, an end portion 17b of the elastic portion 17 extends at least partly outside the circular line defined by the periphery of the cap 8. The elastic portion 17 is furthermore slightly angled in a direction perpendicular to the plane of the principal extension of the cap. More precisely, the elastic portion 17 is angled in the direction that in the mounted state of the cap 8 is turned toward the hub flange 13.

At mounting, the cap 8 is placed in a transition position, in which it is inserted into the circular countersunk portion 15 in the disc member 7, and the first engagement members 9 are inserted into the respective engagement cavities 16a. For this purpose, the mainly circular periphery of the cap 8 has a radius that is suitably adapted to the radius of the circular countersunk portion 15, so that a guiding of the cap 8, substantially concentric with the disc 2, is obtained by the countersunk portion 15 while the cap 8 can be rotated in the countersunk portion 15 without substantial friction arising between the periphery of the cap 8 and the periphery of the countersunk portion 15.

In the transition position, the second engagement members 16, in a direction perpendicular to the disc plane, are on a level with the respective engagement gap 12 defined by the first engagement member 9. Upon rotation of the cap in the disc plane, i.e., in the countersunk portion 15, from the transition position into the mounted position, the respective pairs of first and second engagement members 9, 16 move into engagement with each other, i.e., the engagement gaps 12 receive the respective second engagement members 16.

At the mounting, the cap 8 assumes an intermediate position, which in this embodiment is the same as the transition position, in which the elastic portion 17, by means of contact with the disc member 7, assumes a resilient position, in which it is deformed. More precisely, upon the insertion of the cap 8 into the countersunk portion 15, the elastic portion 17 is deflected by the contact of the end portion 17b with the disc member 7 outside the countersunk portion 15. When the cap 8 then is rotated toward the final mounted position, the elastic portion 17 assumes, by the fact that the end portion thereof, by spring action (i.e., by means of release of elastic energy stored in the deformed position), is inserted into the locking cavity 18, a blocking position, in which it is not deformed or less deformed than in the resilient position.

The elastic portion 17 may be formed integrally together with the other parts of the cap 8 inclusive of the engagement members 9, which imparts the cap a very simple and functional design. Preferably, the cap including the elastic portion and the engagement members are made of injection-moulded plastic. Alternatively, the cap including said parts may be made in another manner, e.g., of a punched metal sheet.

Here, reference is made to Fig. 5. As an alternative, the disc member 7 may be provided with a rounded protuberance 18' and at the end portion 17b thereof, the elastic portion 17 may have a blocking cavity 17a', the elastic portion 17 assuming a resilient position at the mounting of the cap by virtue of the contact of the end portion 17b with the protuberance 18'. When the cap 8 is rotated to the final mounted position, then the elastic portion 17, by the fact that the protuberance 18', via the spring action of the elastic portion 17, is inserted into the blocking cavity 17a', assumes a blocking position, in which it is not deformed or less deformed than in the resilient position. In such an embodiment, the intermediate position, in which the elastic portion 17 assumes the resilient position, may differ from the transition position, in which the engagement members 9, 16, in a direction perpendicular to the disc plane, are on a level with each other but yet not in engagement with each other.

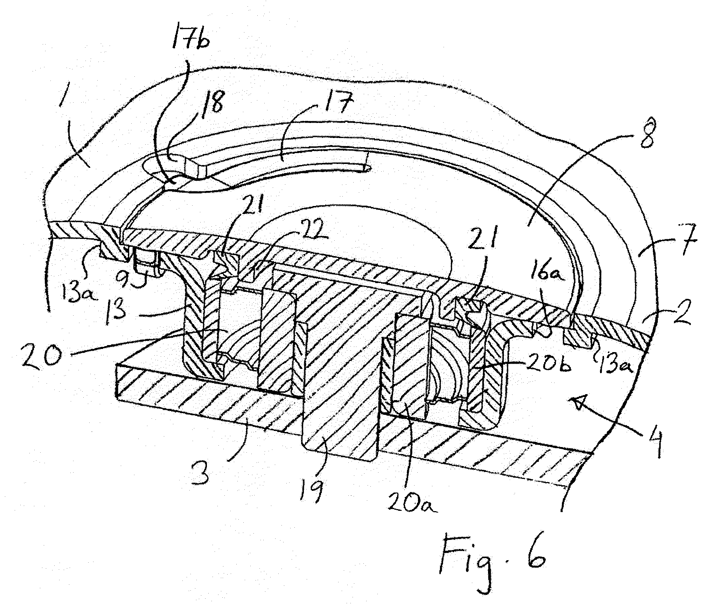

In Fig. 6, a perspective view is shown of a cross-section along the line VI-VI in Fig. 1 of the disc assembly 1 mounted to an arm 3 via a hub 4. In this embodiment, as mentioned, the disc assembly 1 comprises the cap 8 and the disc device 7, in turn comprising the hub shell 13 included in the hub 4 and, as mentioned, attached to the disc 2 by means of a welding seam 13a in the periphery of the hub shell 13. A bolt 19, concentric with the rotation axis of the disc 2, is screwed against the arm 3 and than holds an inner race 20a of a mounting-bearing device 20, in the form of a ball bearing, which also comprises an outer race 20b as well as bearing balls (not shown) situated between the races. The hub shell 13 is attached to the outer race 20b.

The cap 8 is provided with a ring-shaped sealing member in the form of a V-ring 21, which is kept in place by being fitted slightly extended around a ring-shaped shoulder on the inside of the cap 8. The sealing member 21 may advantageously be premounted to the cap 8 for easy handling when mounting the cap 8. Such a premounting may considerably simplify the handling for the user. Since the discs 2 in agricultural machines are substantially vertically orientated, sealing rings provided separately will impose problems for the user in that the same has to keep the sealing ring in place in a vertical position at the same time as the cap is mounted. In this embodiment, the sealing member, i.e., the V-ring 21, in the mounted state of the cap 8, abuts against the outer race 20b by a lip, which makes that the sealing member 21 will be worn minimally. The sealing member 21 provides an efficient seal that protects against penetration of dirt and dust into the hub 4. The V-ring-seal solution is furthermore space-saving, which contributes to the fact that the cap 8 can be made thin. Thereby, the possibilities increase to design a cap 8 that does not project outside the delimitation surface of the disc 2, and accordingly the risk that the cap will be damaged or torn away during use can be minimized. Alternatively, an O-ring or another type of sealing member 21 may be used.

Transverse to the disc plane, the locking cavity 18 has a greater extension than the end portion 17b of the elastic portion 17. This allows the cap 8 to be easily detached without being damaged by placing the end of an elongate tool between the end portion 17b and an edge of the locking cavity 18, and using the same, with support against the edge of the locking cavity, to bend up the elastic portion 17 so that the end portion 17b is brought out of the locking cavity 18, the elastic portion 17 being brought out of the blocking position, after which the cap can be rotated in the disc plane so that the engagement members 9, 16 leave the mutual engagements and the cap 8 can be removed from the countersunk portion 15 in the disc member 7.

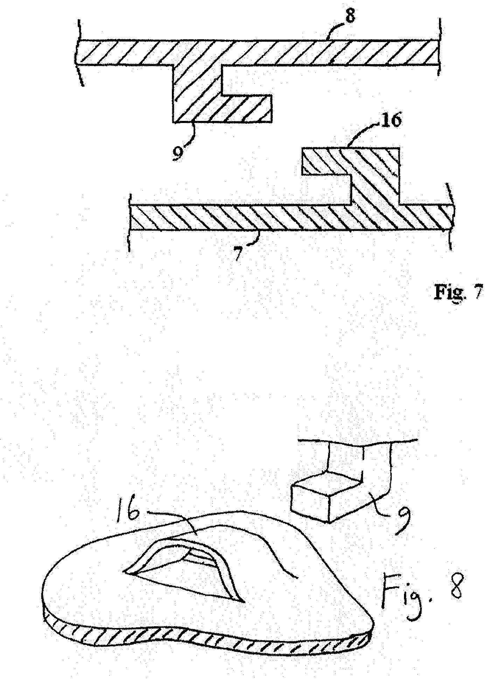

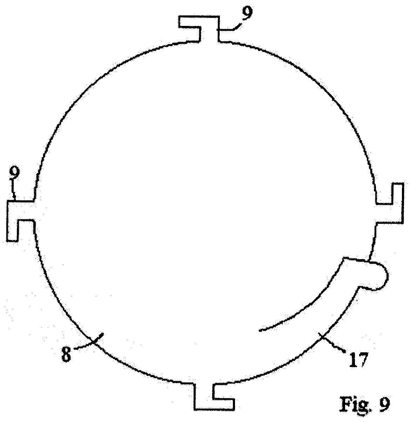

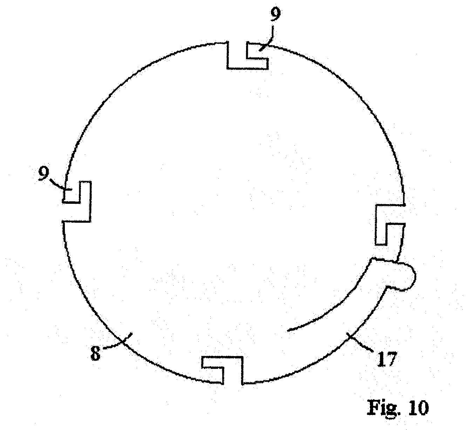

A large number of alternative embodiments are feasible. As an example not according to the invention, the first engagement members 9 as described above, i.e., the protuberances 9, may be formed on the disc member 7, and engagement cavities 16a of the second engagement members 16 may be formed on the cap 8. Alternatively, as is shown schematically in Fig. 7, the engagement members on both the cap 8 and the disc member 7 may be formed as protuberances of the type described above, pairs of protuberances being arranged to come into engagement with each other. As an additional alternative, as is shown schematically in Fig. 8, the second engagement members 16 formed of the engagement cavities 16a may be replaced by loops 16. In an additional alternative, schematically shown in Figs. 9 and 10, the protuberances 9 may be provided on the periphery of the cap 8, instead of on the inside thereof, the engagement members of the disc member being complementary arranged in a suitable form, e.g., as loops shown in Fig. 8. Irrespective of the design of the engagement members, the pairs of the same may be more than four or only one, two or three in number.

Furthermore, in yet an alternative, the elastic portion 17 described above may be provided on the disc member 7 and the locking cavity 18 described above may be formed on the cap 8. An additional alternative for the locking device has been described above, reference being made to Fig. 5.

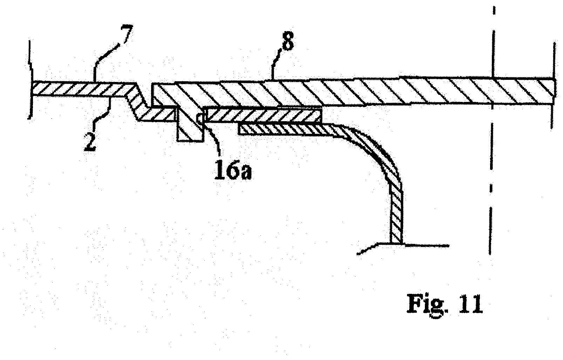

In the embodiment example described with reference to Figs. 1-4, the disc member 7 comprises a disc 2 and a hub shell 13. Alternatively, as is shown schematically in Fig. 11, the disc member 7 may have a disc 2, which in turn has the engagement cavities 16a of the second engagement members 16. Thus, the disc 2 may have all members requisite for the clamping and locking of the cap 8.

The invention may, due to the small space requirement thereof, advantageously be applied to sowing machines having V-disc where the available space for the disc members often is limited, even if also other application areas of course are feasible.

## Claims

1. A cap connected to a disc member of a disc assembly (1) for an agricultural machine, which cap (8) is provided with at least one first engagement member (9), which, in a mounted position of the cap (8) on the disc member (7), is arranged to be in engagement with one of at least one second engagement member (16) exhibited by the disc member, besides which the cap has at least one part (17) of a locking device (17, 18) that, in the mounted position of the cap on the disc member, is arranged to assume a locking position for the cap (8) in relation to the disc member (7), **characterized in that** said at least one first engagement member (9) of the cap (8) comprises an end portion (11), an engagement gap (12) being formed between the end portion (11) and a surface (10) adjacent to the first engagement member (9) which surface is the inner surface (10) of the cap (8) and which surface faces the disc member (7) when the cap (8) is mounted on the disc member (7), the engagement gap (12) being arranged to receive, in the mounted position of the cap, at least a part of the second engagement member (16) of the disc member (7).

2. A cap according to claim 1, the engagement gap (12), being arranged to receive, in the mounted position of the cap, an area at an edge of an engagement recess (16a) in the disc member (7).

3. A cap according to claim 1 or 2, that is arranged to assume, at mounting, a transition position in which the second engagement member (16), in a direction perpendicular to a disc plane corresponding to a plane of the principal extension of the disc (2), is on a level with the engagement gap (12).

4. A cap according to claim 3, arranged to move mainly parallel to the disc plane, from the transition position into the mounted position.

5. A cap according to any one of claims 1-4, the locking device (17, 18) including an elastic portion (17) that is exhibited by the cap (8), which elastic portion (17) is arranged to assume, at the mounting of the cap (8) and in an intermediate position of the cap (8), a resilient position, in which it is elastically deformed by means of contact with the disc member (7), besides which the elastic portion (17) is arranged to assume, in the locking position of the locking device (17, 18), a blocking position, in which it is not deformed or less deformed than in the resilient position.

6. A cap according to claim 5, the elastic portion (17), being arranged to be, in the blocking position, at least partly situated in a locking cavity (18) exhibited by the disc member (7).

7. A cap according to claim 6, the transition position of the cap (8) corresponding to the intermediate position thereof.

8. A disc member (7) connected to a cap of a disc assembly (1) for an agricultural machine, which disc member is provided with at least one second engagement member (16), which, in a mounted position of the cap (8) on the disc member (7), is arranged to be in engagement with one of at least one first engagement member (9) exhibited by the cap (8), besides which the disc member (7) has at least one part (18) of a locking device (17, 18) that is arranged to assume, in the mounted position of the cap, a locking position for the cap (8) in relation to the disc member (7), **characterized in that** said at least one second engagement member (16) of the disc member (7) comprises an area at an edge of an engagement recess (16a) in the disc member (7), which area (16) is arranged to be, in the mounted state of the cap (8), at least partly situated in an engagement gap (12) formed between an end portion (11) exhibited by the engagement member (9) of the cap and a surface (10) adjacent to the first engagement member (9) of the cap.

9. A disc member (7) according to claim 8, the disc member (7) being arranged to set, at the mounting of the cap (8) and in an intermediate position of the cap (8), an elastic portion (17) exhibited by the cap in a resilient position by means of contact with the elastic portion (17), besides which the locking device (17, 18) includes a locking cavity (18) that is exhibited by the disc member (7), which locking cavity (18) is arranged to receive, in the locking position of the locking device (17, 18), at least a part of the elastic portion (17) so that the elastic portion (17) assumes a locking position, in which it is not deformed or less deformed than in the resilient position.

10. A disc assembly (1) for an agricultural machine, comprising a cap (8) according to claim 1 and a disc member (7) according to claim 8.

11. A disc assembly according to claim 10, the disc member (7) including a hub flange (14) having said at least one second engagement member (16).

12. A disc assembly according to claim 10, the second engagement member (16) including an area at an edge of an engagement recess (16a) in the cap (8) or the disc member (7).

13. A disc assembly according to anyone of claims 10-12, the cap (8), being arranged to assume, at mounting, a transition position in which the second engagement member (16), in a direction perpendicular to a disc plane corresponding to a plane of the principal extension of the disc member (7), is on a level with the engagement gap (12).

14. A disc assembly according to claim 13, the cap (8) being arranged to move mainly parallel to the disc plane, from the transition position into the mounted position.

15. A disc assembly according to any one of the preceding claims 10-14, the locking device (17, 18) including an elastic portion (17) that is exhibited by one of the cap (8) and the disc member (7), which elastic portion (17) is arranged to assume, at the mounting of the cap (8) and an intermediate position of the cap (8), a resilient position, in which it is elastically deformed by means of contact with the other one of the cap (8) and the disc member (7), besides which the elastic portion (17) is arranged to assume, in the locking position of the locking device (17, 18), a blocking position, in which it is not deformed or less deformed than in the resilient position.

16. A disc assembly according to claim 15, the locking device including a locking cavity (18) that is exhibited by the other one of the cap (8) and the disc member (7), which locking cavity (18) is arranged to receive, in the mounted position of the cap, at least a part of the elastic portion (17).

17. A disc assembly according to claim 15 or 16 depending on claim 13 or 14, the transition position of the cap (8) corresponding the intermediate position thereof.

## Patentansprüche

1. Kappe, die mit einem Scheibenelement einer Scheibenbaugruppe (1) für eine Landmaschine verbunden ist, wobei die Kappe (8) mit mindestens einem ersten Eingriffselement (9) bereitgestellt ist, welches angeordnet ist, in einer Einbaulage der Kappe (8) an dem Scheibenelement (7) im Eingriff mit einem aus mindestens einem zweiten Eingriffselement (16), welches von dem Scheibenelement gezeigt wird, zu stehen, wobei die Kappe ferner mindestens einen Teil (17) einer Arretiervorrichtung (17, 18) aufweist, die angeordnet ist, in der Einbaulage der Kappe an dem Scheibenelement eine Arretierstellung für die Kappe (8) bezogen auf das Scheibenelement (7) einzunehmen,
**dadurch gekennzeichnet, dass** das mindestens eine erste Eingriffselement (9) der Kappe (8) einen Endabschnitt (11) umfasst, wobei ein Eingriffsspalt (12) zwischen dem Endabschnitt (11) und einer an das erste Eingriffselement (9) angrenzenden Fläche (10) ausgebildet ist, wobei die Fläche die Innenfläche (10) der Kappe (8) ist und wobei die Fläche dem Scheibenelement (7) zugewandt ist, wenn die Kappe (8) an dem Scheibenelement (7) angebracht ist, wobei der Eingriffsspalt (12) angeordnet ist, in der Einbaulage der Kappe mindestens einen Teil des zweiten Eingriffselements (16) des Scheibenelements (7) aufzunehmen.

2. Kappe nach Anspruch 1, wobei der Eingriffsspalt (12) angeordnet ist, in der Einbaulage der Kappe einen Bereich an einem Rand einer Eingriffsaussparung (16a) in dem Scheibenelement (7) aufzunehmen.

3. Kappe nach Anspruch 1 oder 2, die angeordnet ist, beim Einbau eine Übergangsstellung einzunehmen, in welcher das zweite Eingriffselement (16) in einer Richtung senkrecht zu einer Scheibenebene, die einer Haupterstreckungsebene der Scheibe (2) entspricht, auf einer Höhe mit dem Eingriffsspalt (12) liegt.

4. Kappe nach Anspruch 3, angeordnet, sich von der Übergangsstellung in die Einbaulage hauptsächlich parallel zur Scheibenebene zu bewegen.

5. Kappe nach einem der Ansprüche 1-4, wobei die Arretiervorrichtung (17, 18) einen elastischen Abschnitt (17) beinhaltet, der von der Kappe (8) gezeigt wird, wobei der elastische Abschnitt (17) angeordnet ist, beim Einbau der Kappe (8) sowie in einer Zwischenstellung der Kappe (8) eine nachgiebige Stellung einzunehmen, in der er durch Kontakt mit dem Scheibenelement (7) elastisch verformt wird, wobei der elastische Abschnitt (17) ferner angeordnet ist, in der Arretierstellung der Arretiervorrichtung (17, 18) eine Blockierstellung einzunehmen, in welcher er nicht verformt wird oder weniger verformt wird als in der nachgiebigen Stellung.

6. Kappe nach Anspruch 5, wobei der elastische Abschnitt (17) angeordnet ist, sich in der Blockierstellung zumindest teilweise in einer Arretiervertiefung (18), die von dem Scheibenelement (7) gezeigt wird, zu befinden.

7. Kappe nach Anspruch 6, wobei die Übergangsstellung der Kappe (8) deren Zwischenstellung entspricht.

8. Scheibenelement (7), das mit einer Kappe einer Scheibenbaugruppe (1) für eine Landmaschine verbunden ist, wobei das Scheibenelement mit mindestens einem zweiten Eingriffselement (16) bereitgestellt ist, welches angeordnet ist, in einer Einbaulage der Kappe (8) an dem Scheibenelement (7) im Eingriff mit einem aus mindestens einem ersten Eingriffselement (9), das von der Kappe (8) gezeigt wird, zu stehen, wobei das Scheibenelement (7) ferner mindestens einen Teil (18) einer Arretiervorrichtung (17, 18) aufweist, der angeordnet ist, in der Einbaulage der Kappe eine Arretierstellung für die Kappe (8) bezogen auf das Scheibenelement (7) einzunehmen, **dadurch gekennzeichnet, dass** das mindestens eine zweite Eingriffselement (16) des Scheibenelements (7) einen Bereich an einem Rand einer Eingriffsaussparung (16a) in dem Scheibenelement (7) umfasst, dessen Bereich (16) angeordnet ist, sich im angebrachten Zustand der Kappe (8) zumindest teilweise in einem Eingriffsspalt (12) zu befinden, der zwischen einem von dem Eingriffselement (9) der Kappe gezeigten Endabschnitt (11) und einer an das erste Eingriffselement (9) der Kappe angrenzenden Fläche (10) ausgebildet wird.

9. Scheibenelement (7) nach Anspruch 8, wobei das Scheibenelement (7) angeordnet ist, beim Einbau der Kappe (8) sowie in einer Zwischenstellung der Kappe (8) einen elastischen Abschnitt (17), der von der Kappe gezeigt wird, durch Kontakt mit dem elastischen Abschnitt (17) in eine nachgiebige Position zu versetzen, wobei die Arretiervorrichtung (17, 18) ferner eine Arretiervertiefung (18) beinhaltet, die von dem Scheibenelement (7) gezeigt wird, wobei die Arretiervertiefung (18) angeordnet ist, in der Arretierstellung der Arretiervorrichtung (17, 18) zumindest einen Teil des elastischen Abschnitts (17) aufzunehmen, sodass der elastische Abschnitt (17) eine Arretierstellung einnimmt, in welcher er nicht verformt wird oder weniger verformt wird als in der nachgiebigen Stellung.

10. Scheibenbaugruppe (1) für eine Landmaschine, umfassend eine Kappe (8) nach Anspruch 1 und ein Scheibenelement (7) nach Anspruch 8.

11. Scheibenbaugruppe nach Anspruch 10, wobei das Scheibenelement (7) einen Nabenflansch (14) beinhaltet, der das mindestens eine zweite Eingriffselement (16) aufweist.

12. Scheibenbaugruppe nach Anspruch 10, wobei das zweite Eingriffselement (16) einen Bereich an einem Rand einer Eingriffsaussparung (16a) in der Kappe (8) oder in dem Scheibenelement (7) aufweist.

13. Scheibenbaugruppe nach einem der Ansprüche 10-12, wobei die Kappe (8) angeordnet ist, beim Einbau eine Übergangsstellung einzunehmen, in der das zweite Eingriffselement (16) in einer Richtung senkrecht zu einer Scheibenebene, die einer Haupterstreckungsebene des Scheibenelements (7) entspricht, auf einer Höhe mit dem Eingriffsspalt (12) liegt.

14. Scheibenbaugruppe nach Anspruch 13, wobei die Kappe (8) angeordnet ist, sich von der Übergangsstellung in die Einbaulage hauptsächlich parallel zur Scheibenebene zu bewegen.

15. Scheibenbaugruppe nach einem der vorhergehenden Ansprüche 10-14, wobei die Arretiervorrichtung (17, 18) einen elastischen Abschnitt (17) beinhaltet, der von einem aus der Kappe (8) und dem Scheibenelement (7) gezeigt wird, wobei der elastische Abschnitt (17) angeordnet ist, beim Einbau der Kappe (8) sowie in einer Zwischenstellung der Kappe (8) eine nachgiebige Stellung einzunehmen, in welcher er durch Kontakt mit dem anderen aus der Kappe (8) und dem Scheibenelement (7) elastisch verformt wird, wobei der elastische Abschnitt (17) ferner angeordnet ist, in der Arretierstellung der Arretiervorrichtung (17, 18) eine Blockierstellung einzunehmen, in welcher er nicht verformt wird oder weniger verformt wird als in der nachgiebigen Stellung.

16. Scheibenbaugruppe nach Anspruch 15, wobei die Arretiervorrichtung eine Arretiervertiefung (18) beinhaltet, die von dem anderen aus der Kappe (8) und dem Scheibenelement (7) gezeigt wird, wobei die Arretiervertiefung (18) angeordnet ist, in der Einbaulage der Kappe zumindest einen Teil des elastischen Abschnitts (17) aufzunehmen.

17. Scheibenbaugruppe nach Anspruch 15 oder 16, abhängig von Anspruch 13 oder 14, wobei die Übergangsstellung der Kappe (8) deren Zwischenstellung entspricht.

## Revendications

1. Cache relié à un élément de disque d'un ensemble disque (1) destiné à une machine agricole, ledit cache (8) étant pourvu d'au moins un premier organe de prise (9) qui, dans une position montée du cache (8) sur l'élément de disque (7), est agencé de façon à être en prise avec au moins un second organe de prise (16) compris dans l'élément de disque, le cache comportant en outre au moins une partie (17) d'un dispositif de verrouillage (17, 18) qui, dans la position montée du cache sur l'élément de disque, est agencée pour prendre une position de verrouillage pour le cache (8) par rapport à l'élément de disque (7),
**caractérisé en ce que** ledit au moins un premier organe de prise (9) du cache (8) comprend une partie d'extrémité (11), un espace de prise (12) étant formé entre la partie d'extrémité (11) et une surface (10) adjacente au premier organe de prise (9), ladite surface étant la surface intérieure (10) du cache (8) et ladite surface faisant face à l'élément de disque (7) lorsque le cache (8) est monté sur l'élément de disque (7), l'espace de prise (12) étant agencé pour recevoir, dans la position montée du cache, au moins une partie du second organe de prise (16) de l'élément de disque (7).

2. Cache selon la revendication 1, dans lequel l'espace de prise (12) est agencé pour recevoir, dans la position montée du cache, une surface au niveau d'un bord d'un évidement de prise (16a) dans l'élément de disque (7).

3. Cache selon la revendication 1 ou 2, agencé pour prendre, au montage, une position de transition dans laquelle le second organe de prise (16), dans une direction perpendiculaire à un plan de disque correspondant à un plan de l'extension principale du disque (2), est au même niveau que l'espace de prise (12) .

4. Cache selon la revendication 3, agencé pour se déplacer principalement parallèlement au plan de disque, de la position de transition à la position montée.

5. Cache selon l'une quelconque des revendications 1 à 4, dans lequel le dispositif de verrouillage (17, 18) inclut une partie élastique (17) qui est comprise dans le cache (8), ladite partie élastique (17) étant agencée pour prendre, au montage du cache (8) et dans une position intermédiaire du cache (8), une position élastique, dans laquelle elle est élastiquement déformée par un contact avec l'élément de disque (7), ladite partie élastique (17) étant en outre agencée pour prendre, dans la position de verrouillage du dispositif de verrouillage (17, 18), une position de blocage dans laquelle elle n'est pas déformée ou est moins déformée que dans la position élastique.

6. Cache selon la revendication 5, dans lequel la partie élastique (17) est agencée pour être, dans la position de blocage, au moins en partie située dans une cavité de verrouillage (18) comprise dans l'élément de disque (7).

7. Cache selon la revendication 6, dans lequel la position de transition du cache (8) correspond à sa position intermédiaire.

8. Élément de disque (7) relié à un cache d'un ensemble disque (1) destiné à une machine agricole, ledit élément de disque étant pourvu d'au moins un second organe de prise (16) qui, dans une position montée du cache (8) sur l'élément de disque (7), est agencé pour être en prise avec au moins un premier organe de prise (9) compris dans le cache (8), l'élément de disque (7) comportant en outre au moins une partie (18) d'un dispositif de verrouillage (17, 18) qui est agencé pour prendre, dans la position montée du cache, une position de verrouillage pour le cache (8) par rapport à l'élément de disque (7), **caractérisé en ce que** ledit au moins un second organe de prise (16) de l'élément de disque (7) comprend une surface sur un bord d'un évidement de prise (16a) de l'élément de disque (7), ladite surface (16) étant agencée pour être, dans l'état monté du cache (8), au moins en partie située dans un espace de prise (12) formé entre une partie d'extrémité (11) comprise dans l'organe de prise (9) du cache et une surface (10) adjacente au premier organe de prise (9) du cache.

9. Élément de disque (7) selon la revendication 8, l'élément de disque (7) étant agencé pour définir, au montage du cache (8) et dans une position intermédiaire du cache (8), une partie élastique (17) comprise dans le cache dans une position élastique au moyen d'un contact avec la partie élastique (17), le dispositif de verrouillage (17, 18) incluant en outre une cavité de verrouillage (18) qui est comprise dans l'élément de disque (7), ladite cavité de verrouillage (18) étant agencée pour recevoir, dans la position de verrouillage du dispositif de verrouillage (17, 18), au moins une partie de la partie élastique (17) afin que la partie élastique (17) prenne une position de verrouillage, dans laquelle elle n'est pas déformée ou est moins déformée que dans la position élastique.

10. Ensemble disque (1) pour une machine agricole, comprenant un cache (8) selon la revendication 1 et un élément de disque (7) selon la revendication 8.

11. Ensemble disque selon la revendication 10, dans lequel l'élément de disque (7) inclut une flasque de moyeu (14) comportant ledit au moins un second organe de prise (16).

12. Ensemble disque selon la revendication 10, dans lequel le second organe de prise (16) inclut une surface sur un bord d'un évidement de prise (16a) du cache (8) ou de l'élément de disque (7).

13. Ensemble disque selon l'une quelconque des revendications 10 à 12, dans lequel le cache (8) est agencé pour prendre, au montage, une position de transition dans laquelle le second organe de prise (16), dans une direction perpendiculaire à un plan de disque correspondant à un plan de l'extension principale de l'élément de disque (7), est au même niveau que l'espace de prise (12).

14. Ensemble disque selon la revendication 13, dans lequel le cache (8) est agencé pour se déplacer principalement parallèlement au plan de disque, de la position de transition à la position montée.

15. Ensemble disque selon l'une quelconque des revendications précédentes 10 à 14, dans lequel le dispositif de verrouillage (17, 18) inclut une partie élastique (17) qui est comprise dans l'un du cache (8) et de l'élément de disque (7), ladite partie élastique (17) étant agencée pour prendre, au montage du cache (8) et à une position intermédiaire du cache (8), une position élastique, dans laquelle elle est déformée élastiquement au moyen d'un contact avec l'autre du cache (8) et de l'élément de disque (7), la partie élastique (17) étant en outre agencée pour prendre, dans la position de verrouillage du dispositif de verrouillage (17, 18), une position de blocage dans laquelle elle n'est pas déformée ou est moins déformée que dans la position élastique.

16. Ensemble disque selon la revendication 15, dans lequel le dispositif de verrouillage inclut une cavité de verrouillage (18) qui est comprise dans l'autre du cache (8) et de l'élément de disque (7), ladite cavité de verrouillage (18) étant agencée pour recevoir, dans la position montée du cache, au moins une partie de la partie élastique (17).

17. Ensemble disque selon la revendication 15 ou 16 dépendant de la revendication 13 ou 14, dans lequel la position de transition du cache (8) correspond à sa position intermédiaire.
